Europäisches Patentamt

European Patent Office

Office européen des brevets

(19)

(11) Numéro de publication : **0 320 328 B1**

## (12) FASCICULE DE BREVET EUROPEEN

(45) Date de publication du fascicule du brevet :
18.09.91 Bulletin 91/38

(51) Int. Cl.⁵ : **G01D 15/28**

(21) Numéro de dépôt : **88402939.8**

(22) Date de dépôt : **24.11.88**

(54) Traceur ayant un plateau de support de feuille à profil angulaire.

(30) Priorité : **26.11.87 FR 8716432**

(43) Date de publication de la demande :
**14.06.89 Bulletin 89/24**

(45) Mention de la délivrance du brevet :
**18.09.91 Bulletin 91/38**

(84) Etats contractants désignés :
**DE ES FR GB IT**

(56) Documents cités :
**EP-A- 0 002 255**
**EP-A- 0 191 222**
**US-A- 4 512 505**

(73) Titulaire : **Océ Graphics France S.A.**
**1, Rue Jean Lemoine B.P. 113**
**F-94003 Créteil Cedex (FR)**

(72) Inventeur : **Coste, François R.**
**13, Résidence de France**
**F-94430 Chennevières sur Marne (FR)**

(74) Mandataire : **Hanneman, Henri W.A.M. et al**
**Océ-Nederland B.V. Patents and Information**
**Postbus 101**
**NL-5900 MA Venlo (NL)**

EP 0 320 328 B1

Jouve, 18, rue Saint-Denis, 75001 PARIS

## Description

La présente invention concerne une machine à dessiner, ou traceur, comportant des premiers moyens d'entraînement pour déplacer un support d'écriture, ou feuille, suivant une première direction (X) ; une tête d'écriture portant un outil d'écriture ; des deuxièmes moyens d'entraînement pour déplacer l'outil d'écriture suivant une deuxième direction (Y) de long d'un chemin d'écriture ; un plateau de support de la feuille ayant une partie centrale horizontale comprenant le chemin d'écriture et deux parties avant et arrière pour supporter le feuille à l'avant et à l'arrière de la partie centrale ; et des moyens pour appliquer la feuille contre le plateau au moins dans la partie centrale de celui-ci.

Dans un traceur de ce type, un dessin est reproduit sur la feuille par combinaison du déplacement de la feuille dans la première direction (X) et de l'outil d'écriture dans la deuxième direction (Y) généralement perpendiculaire à la première.

Lors de l'exécution d'un dessin, chaque interruption de tracé est réalisée en faisant passer l'outil d'écriture d'une position abaissée, dans laquelle il est en contact avec la feuille, à une position relevée, dans laquelle il n'est plus en contact avec la feuille. La reprise du tracé est effectuée en commandant le mouvement inverse.

Lorsque l'outil est en position relevée, il est impératif d'éviter un contact accidentel entre la feuille et la pointe d'écriture sous peine de maculer la feuille et de rendre le dessin inexploitable.

Or, lorsque l'entraînement de la feuille est réalisé par exemple au moyen d'un tambour rotatif sur lequel les bords de la feuille sont appliqués par des galets presseurs, et qu'aucun moyen n'est prévu pour maintenir la feuille sur le plateau support, la feuille se déforme et son décollement par rapport au plateau est inévitable dans certaines conditions, notamment lorsque de brusques accélérations sont imposées à la feuille. En se soulevant ainsi, la feuille peut venir au contact de l'outil d'écriture, même lorsque le chemin d'écriture est proche de l'emplacement où la feuille est appliquée contre le tambour d'entraînement.

Le maintien de la feuille contre le plateau, au moins dans la partie centrale de celui-ci, peut être favorisé par l'établissement d'une dépression sous la feuille à travers des ouvertures formées dans le plateau. Une telle disposition est montrée dans les demandes de brevet français No 2599300 et 2599301 au nom de BENSON. Ces documents montrent également des parties avant et arrière du plateau support en forme de jupes dont la surface de support de la feuille comprend plusieurs faces raccordées les unes aux autres par des parties arrondies, une première face prolongeant la partie centrale et les autres faces prolongeant la première face vers le bas avec des inclinaisons croissantes par rapport à l'horizontale.

Or, même un maintien de la feuille par aspiration dans la partie centrale du plateau peut s'avérer insuffisant dans certains cas. Il en est ainsi lorsque la feuille entre en résonance sous l'action de ses moyens d'entraînement, notamment lorsque ceux-ci imposent à la feuille un déplacement rapide suivant la direction X dans un sens et dans l'autre. La feuille est alors animée de mouvements ondulatoires de forte amplitude à ses extrémités avant et arrière, mouvements qui se propagent dans la partie de la feuille supportée par le plateau, jusqu'à provoquer le soulèvement de la feuille par rapport au plateau le long du chemin d'écriture en raison de la faible résistance de la feuille à la déformation.

Pour empêcher, ou au moins limiter, le décollement de la feuille par rapport au plateau, et éviter les inconvénients qui en résultent, il a été proposé d'imposer une inflexion à la feuille afin d'accroître sa raideur et, par conséquent, sa résistance à la déformation. L'inflexion de la feuille est produite en utilisant un plateau support concave à section en forme de V, ou similaire, combiné avec des moyens d'aspiration pour forcer la feuille à épouser la forme du plateau. Une telle disposition est décrite dans le brevet US 4369453 et dans un article de R. J. Kaplan et R. S. Townsend paru dans "Hewlett-Packard Journal", Nov. 1981, p. 33-36.

Cette disposition connue présente toutefois des inconvénients.

Le chemin d'écriture est situé sensiblement au centre du plateau, c'est-à-dire dans le creux de celui-ci. Aussi, en dépit de l'aspiration exercée à travers le plateau, la feuille a tendance à quitter sa surface d'appui sur le plateau lorsqu'un effort moteur est appliqué à la feuille. L'altitude de la feuille par rapport au plateau augmente alors jusqu'à un maximum puis décroît, tandis que la feuille atteint sa vitesse maximale en fin d'accélération en direction X. Si l'outil d'écriture n'est pas suffisamment levé, ou si le départ de la feuille n'est pas suffisamment retardé par rapport à la remontée de l'outil, la surface de la feuille peut heurter la pointe de l'outil. Pour empêcher le contact entre la feuille et l'outil relevé, différents moyens sont utilisés.

Un premier moyen consiste à réaliser un lever de l'outil sur une hauteur suffisante. Pour une aspiration donnée, l'altitude maximale atteinte par la feuille dépend de la nature de celle-ci, de son épaisseur et, surtout de son format. A chaque format correspond donc une hauteur minimale de levée de l'outil. Si l'on désire optimiser les temps d'exécution des dessins quels que soient les formats, il est nécessaire de prévoir des moyens pour déterminer automatiquement la hauteur de levée minimale de l'outil en fonction du format de la feuille, ceci afin d'accroître le délai de relèvement et d'abaissent d'outil uniquement lorsque cela s'avère nécessaire, c'est-à-dire pour les grands formats.

Un autre moyen consiste à utiliser des moyens mécaniques pour empêcher la feuille de venir heurter l'outil relevé, comme, par exemple, une patte fixée à côté de la pointe de l'outil ou un appendice qui se prolonge sur toute la longueur du traceur en avant et en arrière du plateau et qui accompagne la feuille lors de ses déplacements pour limiter ses mouvements parasites.

Une deuxième difficulté liée à l'utilisation d'un plateau support concave réside dans la nécessité de rechercher un compromis concernant le rayon de courbure imposé à la feuille par la forme en "V" du plateau. Le rayon de courbure doit être assez faible pour assurer que l'augmentation de raideur apportée par l'inflexion de la feuille soit suffisante pour stabiliser son mouvement. D'un autre côté, le rayon de courbure doit être assez grand pour ne pas induire de déformation permanente de la feuille. Or, parmi les différents matériaux constitutifs des feuilles, certains sont susceptibles d'être déformés de façon permanente si on leur impose une courbure de rayon relativement faible, comme notamment le papier de 90 g/m².

Enfin, un autre inconvénient du plateau support concave tient à ce qu'il impose l'utilisation d'un tambour segmenté pour l'entraînement de la feuille. En effet, si l'on utilisait un tambour continu, c'est-à-dire un tambour de diamètre constant qui affleure par sa génératrice supérieure au niveau de la surface du plateau, à travers une ouverture allongée formée dans celui-ci, la feuille pourrait, lors de son chargement sur le traceur par l'avant, s'engager dans l'intervalle entre le tambour et le chemin d'écriture arrière (c'est-à-dire la partie du plateau située de l'autre côté du tambour par rapport au chemin d'écriture normal). Pour garantir que le chargement se fasse correctement, il est alors nécessaire de segmenter le tambour, c'est-à-dire de prévoir des parties de plus faible diamètre qui permettent de conserver une continuité du plateau au niveau de ces parties du tambour, et de guider ainsi la feuille lors de son chargement. Ainsi, le plateau concave empêche l'utilisation d'un tambour continu dans un traceur à feuille du fait de l'impossibilité d'assurer un chargement automatique correct.

La présente invention a pour objet de proposer un traceur muni de moyens permettant de limiter efficacement l'amplitude des décollements de la feuille par rapport au plateau au niveau du chemin d'écriture, afin d'éviter toute maculation accidentelle de la feuille par l'outil d'écriture lorsque celui-ci est en position relevée.

Plus particulièrement, l'invention a pour objet de fournir un traceur avec un plateau de support de feuille dont la géométrie est déterminée pour conférer à la feuille une raideur accrue, sans rencontrer les inconvénients précités des plateaux concaves.

Conformément à l'invention :

— chacune des parties avant et arrière du plateau comprend une première face plane raccordée à la partie centrale par une première arête horizontale et formant, par rapport à l'horizontale, un premier angle supérieur ou égal à 0°, et au moins une deuxième face plane raccordée à la première par une deuxième arête horizontale ayant un rayon de courbure inférieur à une valeur estimée du rayon de courbure naturel de la feuille, la deuxième face formant par rapport à l'horizontale un deuxième angle supérieur au premier et ayant une troisième arête horizontale à sa partie inférieure, les arêtes et les faces ayant une géométrie choisie pour que la feuille, s'appuyant sur les deuxième et troisième arêtes, soit contrainte à s'écarter des première et deuxième faces et à s'élever au-dessus du niveau de la partie centrale avant de venir au contact de celle-ci.

Grâce à cette géométrie particulière, les parties avant et arrière du plateau, ou jupes, contribuent à empêcher la feuille de se soulever de la partie centrale du plateau.

En s'écartant des première et deuxième faces, la feuille ménage avec ces faces des espaces dans lesquels de l'air est emprisonné, d'où un effet d'amortissement des mouvements de la feuille perpendiculairement aux faces des jupes.

Par ailleurs, lorsque la feuille entre en résonance, les arêtes des jupes s'opposent à la propagation jusqu'au chemin d'écriture des mouvements ondulatoires dont sont animées les parties libres de la feuille qui pendent à l'avant et à l'arrière du traceur. En effet, les chocs de la feuille sur les arêtes des jupes dissipent de l'énergie et amortissent les mouvements parasites.

De plus, en étant contrainte de s'élever jusqu'à une altitude supérieure à celle de la partie centrale du plateau, avant de revenir au niveau de cette partie centrale, la feuille passe d'une forme convexe à une forme concave en formant une ligne d'inflexion qui contribue à augmenter sa raideur et, par conséquent, sa résistance à la déformation. La symétrie du plateau renforce ces effets.

L'invention sera mieux comprise à la lecture de la description faite ci-après, à titre indicatif mais non limitatif, en référence aux dessins annexés sur lesquels :

— la figure 1 est une vue générale schématique d'un mode de réalisation d'un traceur selon l'invention,

— la figure 2 est une vue partielle en élévation de côté et en coupe du traceur de la figure 1,

— les figures 3 et 4 sont des schémas montrant l'action des jupes du plateau de support de feuille pour imposer à celle-ci une forme qui augmente sa raideur et amortir les mouvements parasites de la feuille, et

— la figure 5 est un schéma montrant un mode de réalisation préféré d'un profil de jupe du plateau de support de feuille.

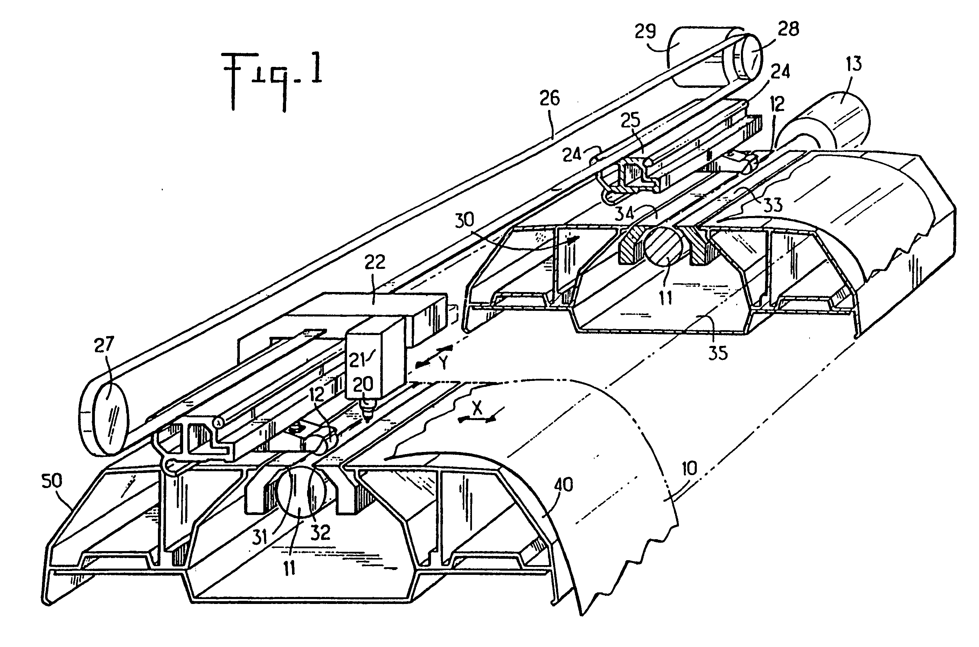

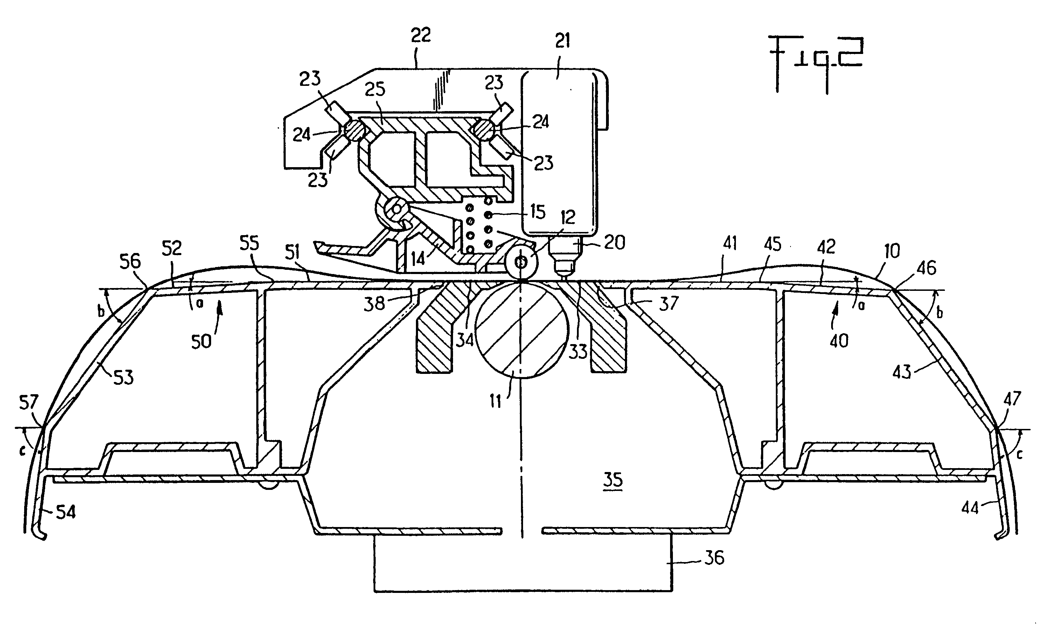

Les figures 1 et 2 illustrent un traceur feuille à feuille au moyen duquel un tracé sur une feuille 10, par exemple une feuille de papier, est réalisé par combinaison du mouvement en translation rectiligne suivant une direction Y d'un outil d'écriture 20 porté par une tête d'écriture 21 et du mouvement en translation de la feuille 10 suivant une direction X perpendiculaire à Y.

La tête d'écriture 21 est montée sur un chariot 22 qui porte des galets 23 roulant sur des rails 24 fixés sur une poutre 25 parallèlement à la direction Y. Le mouvement de l'outil d'écriture 20 en direction Y est produit par entraînement du chariot 22 en translation, dans un sens et dans l'autre, par tout moyen adapté. Dans l'exemple illustré, une courroie sans fin 26 est fixée au chariot 22 et passe, à une extrémité de la poutre 25 sur une poulie de renvoi 27 et, à l'autre extrémité, sur une poulie d'entraînement 28 couplée à un moteur 29.

Des moyens, par exemple électromagnétiques, (non représentés) sont prévus sur la tête d'écriture 21 pour commander le déplacement de l'outil d'écriture 20 d'une position relevée (repos), dans laquelle il n'est pas en contact avec la feuille 10, à une position abaissée (travail), dans laquelle la pointe de l'outil 20 est en contact avec la feuille 10, et inversement. De tels moyens de commande de l'abaissement ou du relevage de l'outil d'écriture, soit par déplacement relatif de l'outil 20 par rapport à la tête d'écriture 21, soit par déplacement relatif de la tête 21 par rapport au chariot 22, sont bien connus, de sorte que leur description détaillée n'est pas ici nécessaire. On pourra par exemple se référer aux demandes de brevet français No 2572572 et 8705166 au nom de BENSON.

Le mouvement de la feuille 10 en direction X est produit par la rotation d'un tambour d'entraînement 11 de diamètre constant, d'axe parallèle à la direction Y et coopérant avec deux galets presseurs 12 qui exercent sur les bords de la feuille 10 une pression tendant à appliquer ces bords contre le tambour 11. L'entraînement en rotation du tambour est assuré par un moteur 13 dont l'arbre de sortie est par exemple couplé directement à l'axe du tambour, comme décrit dans les demandes de brevet français No 2599300 et 2599301 précitées.

Les galets presseurs 12 sont montés libres en rotation à l'extrémité de bras respectifs 14 qui peuvent pivoter par rapport à la poutre 25 autour d'un axe parallèle à la direction Y. La force d'application de chaque galet 12 contre le tambour 11 est produite par un ressort 15 qui s'appuie à ses extrémités sur le bras et sur une face inférieure de la poutre 25.

Un plateau 30 supporte la feuille 10 au niveau du chemin d'écriture, c'est-à-dire la zone d'action de l'outil d'écriture 20, et dans des zones adjacentes à l'avant et à l'arrière du traceur.

Le plateau 30 a une partie centrale horizontale 31. Au milieu de la partie centrale 31, le plateau présente une ouverture 32 allongée dans la direction X et à travers laquelle la génératrice supérieure du tambour 11 affleure ou fait légèrement saillie vers le haut. Du côté avant de l'ouverture 32, la partie centrale du plateau comprend le chemin d'écriture 33, c'est-à-dire la zone du plateau située le long du trajet de l'outil d'écriture 20. La partie centrale du plateau est symétrique par rapport au plan P vertical passant par l'axe du tambour 11 et comprend, du côté arrière de l'ouverture 32, une zone 34 ci-après dénommée chemin d'écriture arrière.

A l'avant et à l'arrière de la partie centrale 31, le plateau 30 est formé par deux jupes 40, 50 disposées symétriquement l'une de l'autre par rapport au plan P. Les deux jupes étant identiques, l'une d'entre elles seulement, par exemple la jupe avant 40 sera décrite ci-après en détail.

La surface de support de la jupe 40 est formée de plusieurs faces planes 41, 42, 43, 44 raccordées les unes aux autres le long d'arêtes horizontales 45, 46, 47.

La face plane 41 s'étend horizontalement dans le prolongement du chemin d'écriture 33, au même niveau que celui-ci. La face plane 42 se raccorde à la face horizontale le long de l'arête 45 en étant inclinée par rapport à l'horizontale d'un angle $a$. La face plane 43 se raccorde à la face inclinée 42 le long de l'arête 46 en étant inclinée par rapport à l'horizontale d'un angle $b$ supérieure à $a$. Enfin, la face plane 44 se raccorde à la face inclinée 43 le long de l'arête 47 en étant inclinée par rapport à l'horizontale d'un angle $c$ supérieur à $b$. Ainsi, les faces 42, 43 et 44 prolongent la face horizontale 41 vers la bas avec des inclinaisons croissantes.

De la même façon, la surface de support de la jupe 50 est formée d'une face plane horizontale 51 située dans le prolongement du chemin d'écriture arrière 34, et à laquelle se raccordent des faces planes 52, 53, 54 d'inclinaisons croissantes $a$, $b$, $c$ en formant des arêtes 55, 56, 57.

Pour contribuer au maintien de la feuille 10 contre la partie centrale 31 du plateau pendant l'écriture, une dépression est engendrée sous la feuille 10. A cet effet, une pression inférieure à la pression atmosphérique est maintenue dans une chambre 35, située au-dessous de la partie centrale du plateau, au moyen d'un dispositif d'aspiration tel qu'un ventilateur 36 (figure 2). La chambre 35 communique avec l'extérieur à travers l'ouverture 32, de chaque côté du tambour 11 et à travers les intervalles 37, 38 entre, respectivement, le chemin d'écriture 33 et la jupe 40 et entre le chemin d'écriture 34 et la jupe 50.

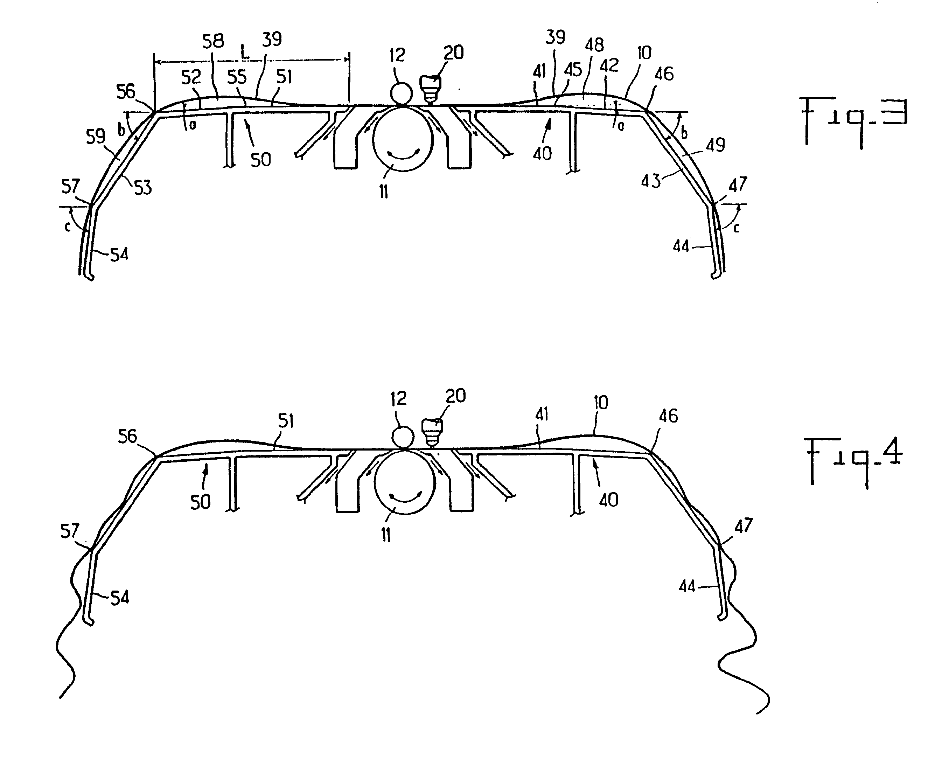

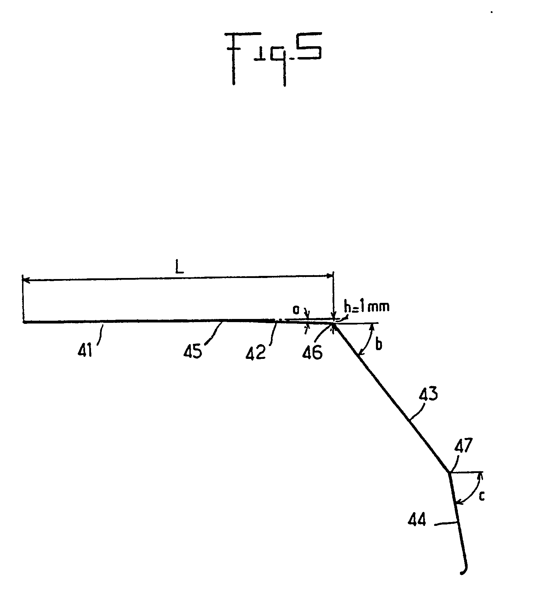

La fonction de maintien de la feuille exercée par le plateau 30 sera maintenant décrite en référence aux figures 3 et 4 sur lesquelles sont seulement schématisés le plateau 30 et la feuille 10.

Comme le montre la figure 3, la feuille 10 adopte sur le traceur une forme à profil courbe. En particulier, en s'appuyant sur les arêtes 46 et 56, la feuille s'élève au-dessus des faces 41 et 51 avant de se poser sur celles-ci sous l'effet de la gravité et de l'aspiration exercée sous la partie centrale du plateau. De la sorte, la feuille passe d'une forme convexe, dans la partie avant de la jupe avant et la partie arrière de la jupe arrière, à une forme concave au niveau de la partie centrale du plateau et des parties adjacentes des jupes, le passage de la forme convexe à la forme concave se faisant le long de lignes 39 de points d'inflexion. La courbure et l'inflexion ainsi imposées à la feuille augmentent de façon significative sa raideur et sa résistance à la déformation, en particulier suivant la direction "X". De plus, la présence d'une forme concave de chaque côté de la partie centrale du plateau renforce ces effets.

La forme de la feuille 10 telle qu'illustrée par la figure 3 résulte de la géométrie particulière des jupes, et notamment de caractéristiques des arêtes 46 et 56.

En premier, les arêtes 46 et 56 doivent avoir un rayon de courbure inférieur à une valeur estimée du rayon de courbure naturel de la feuille 10 pour obliger celle-ci à s'élever au-dessus des faces 42, 52. Par rayon de courbure naturel de la feuille 10, on entend le rayon de courbure minimum que peut suivre la feuille sans qu'il en résulte de déformation permanente. Le rayon de courbure naturel varie selon la nature du matériau constitutif de la feuille. A titre indicatif, la valeur du rayon de courbure naturel pour les feuilles les plus rigides habituellement utilisées dans les traceurs de format A0, par exemple le papier 90 g/m², est égale à 40 mm. On choisira donc, comme valeur estimée un rayon de courbure de 40 mm.

En second, les positions des arêtes 46 et 56 doivent être telles que la feuille 10 s'élève au-dessus du niveau horizontal des faces 41 et 51. Cette condition est satisfaite avec des arêtes 46, 56 situées à un niveau horizontal proche de celui des faces 41, 51, c'est-à-dire, pour un format A0, avec une distance verticale h entre les arêtes 46, 56 et le plan des faces 41, 51 inférieure à 6 mm.

Les différents types de feuilles utilisées ayant des raideurs différentes et, par conséquent, des rayons de courbure naturels différents viennent au contact de la face 41 (51) à des distances, mesurées horizontalement, plus ou moins importantes de l'arête 46 (56). On choisit donc la distance L entre le bord du chemin d'écriture et l'arête 46 (56) suffisamment longue pour que les différents types de feuilles viennent tous au contact de la face 41 (51). Cette distance L doit être supérieure à la valeur estimée du rayon de courbure de la feuille, soit 40 mm. En outre, les arêtes 46 et 56 ne doivent pas être trop éloignées du chemin d'écriture pour que la variation de rayon de courbure aux points d'inflexion soit importante et donne à la feuille une augmentation de raideur sensible. Pour le format A0, cette condition est satisfaite lorsque la distance horizontale L est inférieure à 160 mm.

La figure 3 montre également que la feuille 10, en prenant un profil courbe, s'appuie, du côté avant, sur la face horizontale 41 et les arêtes 46, 47 en formant, avec le plateau, des espaces 48, 49. De la même façon, du côté arrière, la feuille 10 s'appuie sur la face horizontale 51 et les arêtes 56, 57 en formant, avec le plateau, des espaces 58, 59.

L'air emprisonné dans les espaces 48, 49, 58, 59 ne peut s'introduire ou s'échapper que par les extrémités de ces espaces le long des bords de la feuille. On obtient ainsi un amortisseur d'autant plus efficace que la largeur de la feuille est importante. Lors du mouvement de la feuille 10 en direction normale par rapport au plateau, la variation du volume d'air emprisonné dans les espaces 48, 49, 58, 59 conduit à une variation de la vitesse de l'aire aux extrémités de ces espaces, donc à une dissipation d'énergie car l'écoulement de l'air y est turbulent.

La recherche d'un amortissement efficace se produisant même pour des oscillations importantes de la feuille sans que cette dernière ne décolle des arêtes amène à choisir un volume d'air important emprisonné dans chaque espace, c'est-à-dire un nombre faible de faces pour chaque jupe, chaque face présentant une dimension importante mesurée entre les arêtes qui la bordent.

Le nombre et les dimensions des faces inclinées des jupes sont également choisis pour résoudre au mieux les problèmes de frottement et de charges électrostatiques.

Les charges électrostatiques sont largement responsables de l'accroissement du frottement entre le plateau et le support d'écriture. Elles se développent lorsque deux surfaces non conductrices sont en contact. Ceci se produit en particulier lorsque le support est un film polyester qui est l'un des meilleurs matériaux diélectriques.

Pour combattre la génération de charges électrostatiques, l'air totale de la surface de la feuille en contact avec le plateau doit être limitée. Avec les jupes 40 et 50, ceci est obtenu du fait que la feuille 10 prend appui, à l'avant et à l'arrière des faces horizontales 41 et 51, uniquement sur les arêtes 46, 47, 56, 57, ces arêtes étant vives, c'est-à-dire avec un rayon de courbure aussi faible que possible et inférieur à 5 mm.

De plus, le plateau 30 peut être avantageusement muni d'un revêtement soit apte à réduire les frottements et à dissiper les charges électrostatiques, par exemple un revêtement de polytétrafluoroéthylène avec des charges de carbone, soit apte à réduire la formation de telles charges comme un vernis anti-statique.

La recherche d'un bon effet d'amortissement et du moindre contact entre la feuille et les jupes conduit, pour chaque jupe, à prévoir de préférence deux faces inclinées 43, 44 (53, 54) dans le prolongement de la face inclinée 42 (52). La face inclinée 43 (53) forme par rapport à l'horizontale un angle $\underline{b}$ compris entre 50° et 65°, et la distance entre les arêtes 46 et 47 (56 et 57) doit être supérieur à 25 mm. En effet, pour une telle distance, l'angle $\underline{b}$ doit être supérieur à une première valeur pour laquelle la feuille ne remonte plus au-dessus du niveau de la face 41 (51) et inférieur à une deuxième valeur pour laquelle la feuille commence à décoller de l'arête 47.

Quant à la dernière face inclinée 44 (54) de chaque jupe, elle complète la face 43 (53) pour donner à la feuille une courbure souhaitable, son extrémité inférieure recourbée vers l'intérieur servant d'appui à la partie pendante de la feuille. L'arête inférieure de la face 44 (54), et les arêtes 46 et 47 (56 et 57) sont inscrites dans un cercle de rayon supérieur à la valeur estimée (40 mm) du rayon de courbure naturel de la feuille afin que la feuille puisse venir en appui naturellement sur ces trois arêtes.

Une fonction supplémentaire des jupes 40 et 50 est de s'opposer à la propagation vers le chemin d'écriture des mouvements ondulatoires de la feuille 10 lorsque celle-ci entre en résonance. La figure 4 montre la feuille 10 en résonance avec des ondulations de forte amplitude à ses extrémités libres à l'avant et à l'arrière. Ces ondulations sont amorties par les chocs contre les jupes 40 et 50 jusqu'à pratiquement disparaître au niveau du contact de la feuille avec les faces horizontales des jupes.

La figure 5 montre une forme de réalisation préférée d'un profil de jupe pour un traceur multi-formats. Chaque jupe, par exemple la jupe 40, a les dimensions suivantes :
— rayon de courbure des arêtes 46 et 47 égal à 2 mm,
— face horizontale 41 s'étendant depuis un bord situé à 25 mm de l'axe du tambour et dont la dimension, depuis ce bord, jusqu'à l'arête 45 est égale à 40,5 mm,
— face inclinée 42 s'étendant depuis l'arête 45 jusqu'à l'arête 46 située à une distance verticale $\underline{h}$ = 1 mm de la face 41 et à une distance horizontale de 41,5 mm de l'arête 45, ce qui donne un angle d'inclinaison $\underline{a}$ égal à environ 1,4°.
— face inclinée 43 s'étendant depuis l'arête 46 jusqu'à l'arête 47 située à une distance verticale de 48 mm de la face 41 et à une distance horizontale de 75 mm de l'arête 45, ce qui donne un angle d'inclinaison $\underline{b}$ égal à environ 55°.
— face inclinée 44 s'étendant depuis l'arête 47 jusqu'au bord libre de la jupe situé à une distance verticale de 85 mm de la face 41 et à une distance horizontale de 80,5 mm de l'arête 45, ce qui donne un angle d'inclinaison $\underline{c}$ égal à environ 81°.

## Revendications

1. Traceur comportant des premiers moyens d'entraînement (11, 12, 13) pour déplacer une feuille (10) suivant une première direction (X) ; une tête d'écriture (21) portant un outil d'écriture (20) ; des deuxièmes moyens d'entraînement (22, 26, 29) pour déplacer l'outil d'écriture suivant une deuxième direction (Y) le long d'un chemin d'écriture ; un plateau (30) de support de la feuille ayant une partie centrale horizontale (31, 41, 51) comprenant la chemin d'écriture et deux parties avant et arrière (40, 50) pour supporter la feuille à l'avant et à l'arrière de la partie centrale ; et des moyens pour appliquer la feuille contre le plateau au moins dans la partie centrale de celui-ci, caractérisé en ce que :
— chacune des parties avant et arrière comprend une première face plane (42, 52) raccordée à la partie centrale (31, 41, 51) par une première arête horizontale (45, 55) et formant, par rapport à l'horizontale, un premier angle $\underline{a}$ supérieur ou égal à 0°, et au moins une deuxième face plane (43, 53) raccordée à la première (42, 52) par une deuxième arête horizontale (46, 56) ayant un rayon de courbure inférieur à une valeur estimée du rayon de courbure naturel de la feuille (10), la deuxième face (43, 53) formant par rapport à l'horizontale un deuxième angle ($\underline{b}$) supérieur au premier et ayant une troisième arête horizontale (47, 57) à sa partie inférieure, les arêtes et les faces ayant une géométrie choisie pour que la feuille (10), s'appuyant sur les deuxième et troisième arêtes (46, 47, 56, 57) soit contrainte à s'écarter des première et deuxième faces (42, 43, 52, 53) et à s'élever au-dessus du niveau de la partie centrale (31, 41, 51) avant de venir au contact de celle-ci.

2. Traceur selon la revendication 1, caractérisé en ce que le rayon de courbure de la deuxième arête (46, 56) est inférieur à 40 mm.

3. Traceur selon la revendication 2, caractérisé en ce que le rayon de courbure de la deuxième arête (46, 56) est aussi faible que possible, et inférieur à 5 mm.

4. Traceur selon la revendication 1, 2 ou 3, caractérisé en ce que la distance verticale $\underline{h}$ entre le niveau de la partie centrale (31, 41, 51) et la deuxième arête (46, 56) est inférieure à 6 mm.

5. Traceur selon la revendication 4, caractérisé en ce que la distance horizontale entre le chemin d'écriture et la deuxième arête (46, 56) est supérieure à 40 mm.

6. Traceur selon l'une des revendications 1 à 5, caractérisé en ce que le deuxième angle ($\underline{b}$) est compris entre 50° et 65° et la distance entre les deuxième et troisième arêtes (46, 56, 47, 57) est supérieure à 25 mm.

7. Traceur selon l'une des revendications 1 à 6, caractérisé en ce que chacune des parties avant et arrière du plateau comprend une troisième face plane (44, 54) raccordée à la deuxième face par la troisième arête horizontale (47, 57) et formant, par rapport à l'horizontale, un troisième angle ($\underline{c}$) supérieur au

deuxième angle (b) et inférieur à 90°, la troisième face (44, 54) ayant une géométrie choisie pour que la feuille s'appuie sur le bord inférieur de la troisième face et sur les deuxième et troisième arêtes (46, 56, 47, 57) en s'écartant des deuxième et troisième faces.

8. Traceur selon la revendication 7, caractérisé en ce que le profil formé par le bord inférieur de la troisième face et par les deuxième et troisième arêtes (46, 56, 47, 57) est inscrit dans un cercle de rayon supérieur à 40 mm.

9. Traceur selon la revendication 7, caractérisé en ce que le premier angle (a) est sensiblement égal à 1,4°, le deuxième angle (b) est sensiblement égal à 55° et le troisième angle (c) est sensiblement égal à 81°.

10. Traceur selon l'une quelconque des revendications 1 à 9, dans lequel les premiers moyens d'entraînement comprennent un tambour rotatif (11) d'axe horizontal perpendiculaire à la première direction (X) et dont la génératrice supérieure affleure sensiblement au niveau de la partie centrale (31, 41, 51) du plateau (30) à travers une ouverture (32) formée dans celui-ci, et des moyens (12) pour appliquer le feuille contre le tambour rotatif, caractérisé en ce que la surface de support du plateau (30) est symétrique par rapport au plan vertical passant par l'axe du tambour (11).

11. Traceur selon l'une quelconque des revendications 1 à 10, caractérisé en ce que l'application de la feuille (10) contre le plateau (30) dans la partie centrale (31, 41, 51) de celui-ci est réalisée par aspiration à travers des ouvertures (32, 37, 38) formées dans le plateau (30).

12. Traceur selon l'une quelconque des revendications 1 à 11, caractérisé en ce que la surface de support du plateau (30) est munie d'un revêtement électriquement conducteur.

13. Traceur selon l'une quelconque des revendications 1 à 11, caractérisé en ce que la surface de support du plateau (30) est munie d'un revêtement anti-statique.

**Patentansprüche**

1. Aufzeichnungsapparat mit ersten Antriebsmitteln (11, 12, 13) zum Bewegen eines Blattes (10) in einer ersten Richtung (X), einem Schreibkopf (21), der ein Schreibwerkzeug (20) trägt, zweiten Antriebsmitteln (22, 26, 29) zum Bewegen des Schreibwerkzeugs in einer zweiten Richtung (Y) längs eines Schreibweges, einem Tisch (30) zur Unterstützung des Blattes, der einen den Schreibweg enthaltenden waagerechten Mittelabschnitt (31, 41, 51) und zwei vordere und hintere Abschnitte (40, 50) zur Unterstützung des Blattes vor und hinter dem Mittelabschnitt aufweist, und mit Mitteln zum Anlegen des Blattes an den Tisch wenigstens im Mittelabschnitt desselben, dadurch gekennzeichnet, daß :

— jeder der vorderen und hinteren Abschnitte eine erste ebene Fläche (42, 52), die sich über eine erste waagerechte Kante (45, 55) an den Mittelabschnitt (31, 41, 51) anschließt und mit der Horizontalen einen ersten Winkel a größer oder gleich 0° bildet, und wenigstens eine zweite ebene Fläche (43, 53) aufweist, die sich über eine zweite waagerechte Kante (46, 56), deren Krümmungsradius kleiner ist als ein durch den natürlichen Krümmungsradius des Blattes (10) bestimmter Wert, an die erste ebene Fläche (42, 52) anschließt und mit der Horizontalen einen zweiten Winkel (b) bildet, der größer als der erstere Winkel ist, und die eine dritte waagerechte Kante (47, 57) in ihrem unteren Teil aufweist, wobei die Kanten und Flächen eine Geometrie aufweisen, die so gewählt ist, daß das Blatt (10), das sich auf den zweiten und dritten Kanten (46, 47, 56, 57) abstützt, gezwungen wird, sich von den ersten und zweiten Flächen (42, 43, 52, 53) abzulösen und sich über das Niveau des Mittelabschnitts (31, 41, 51) zu erheben, bevor es mit demselben in Berührung kommt.

2. Aufzeichnungsapparat nach Anspruch 1, dadurch gekennzeichnet, daß der Krümmungsradius der zweiten Kante (46, 56) kleiner ist als 40 mm.

3. Aufzeichnungsapparat nach Anspruch 2, dadurch gekennzeichnet, daß der Krümmungsradius der zweiten Kante (46, 56) so klein wie möglich und kleiner als 5 mm ist.

4. Aufzeichnungsapparat nach Anspruch 1, 2 oder 3, dadurch gekennzeichnet, daß der vertikale Abstand h zwischen dem Niveau des Mittelabschnitts (31, 41, 51) und der zweiten Kante (46, 56) kleiner als 6 mm ist.

5. Aufzeichnungsapparat nach Anspruch 4, dadurch gekennzeichnet, daß der waagerechte Abstand zwischen dem Schreibweg und der zweiten Kante (46, 56) gröber als 40 mm ist.

6. Aufzeichnungsapparat nach einem der Ansprüche 1 bis 5, dadurch gekennzeichnet, daß der zweite Winkel (b) zwischen 50° und 65° liegt und der Abstand zwischen den zweiten und dritten Kanten (46, 56, 47, 57) größer als 25 mm ist.

7. Aufzeichnungsapparat nach einem der Ansprüche 1 bis 6, dadurch gekennzeichnet, daß jeder der vorderen und hinteren Abschnitte des Tisches eine dritte ebene Fläche (44, 54) aufweist, die sich an die zweite Fläche über die dritte waagerechte Kante (47, 57) anschließt und mit der Horizontalen einen dritten Winkel (c) bildet, der größer als der zweite Winkel (b) und kleiner als 90° ist, wobei die dritte Fläche (44, 54) eine Geometrie aufweist, die so gewählt ist, daß das Blatt sich auf dem unteren Rand der dritten Fläche und auf den zweiten und dritten Kanten (46, 56, 47, 57) abstützt, wobei es sich von den zweiten und dritten Flächen abhebt.

8. Aufzeichnungsapparat nach Anspruch 7, dadurch gekennzeichnet, daß das durch den unteren Rand der dritten Fläche und die zweiten und dritten Kanten (46, 56, 47, 57) gebildete Profil in einen Kreis einbeschrieben ist, dessen Radius größer als 40 mm ist.

9. Aufzeichnungsapparat nach Anspruch 7, dadurch gekennzeichnet, daß der erste Winkel (a) annähernd gleich 1,4° ist, der zweite Winkel (b) annähernd gleich 55° und der dritte Winkel (c) annähernd gleich 81° ist.

10. Aufzeichnungsapparat nach einen der Ansprüche 1 bis 9, bei dem die ersten Antriebsmittel eine Drehtrommel (11), deren Achse horizontal, rechtwinklig zu der ersten Richtung (X) verläuft und deren obere Scheitellinie in einer in dem Tisch (30) gebildeten Öffnung (32) im wesentlichen mit dem Niveau des Mittelabschnitts (31, 41, 51) des Tisches fluchtet, und Mittel (12) zum Andrücken des Blattes gegen die Drehtrommel aufweist, dadurch gekennzeichnet, daß die Auflageoberfläche des Tisches (30) symmetrisch in Bezug auf eine durch die Achse der Trommel (11) verlaufende vertikale Ebene ist.

11. Aufzeichnungsapparat nach irgendeinem der Ansprüche 1 bis 10, dadurch gekennzeichnet, daß die Anlage des Blattes (10) an dem Tisch (30) in dem Mittelabschnitt (31, 41, 51) desselben durch Sogwirkung durch Öffnungen (32, 37, 38) in dem Tisch (30) erreicht wird.

12. Aufzeichnungsapparat nach irgendeinem der Ansprüche 1 bis 11, dadurch gekennzeichnet, daß die Auflageoberfläche des Tisches (30) mit einem elektrisch leitenden Überzug versehen ist.

13. Aufzeichnungsapparat nach irgendeinem der Ansprüche 1 bis 11, dadurch gekennzeichnet, daß die Auflageoberfläche des Tisches (30) mit einem antistatischen Überzug versehen ist.


**Claims**

1. Plotter comprising first entrainment means (11, 12, 13) to displace a sheet (10) in a first direction (X); a writing head (21) carrying a writing implement (20); second entrainment means (22, 26, 29) to displace the writing implement in a second direction (Y) along a writing path ; a sheet support plate (30) having a horizontal central part (31, 41, 51) comprising the writing path and two paths in front and behind (40, 50) to support the sheet in front and behind the central part; and means for applying the sheet against the plate at least in the central part of this, characterised in that :
— each of the front and rear parts comprises a first flat face (42, 52) connected to the central part (31, 41, 51) via a first horizontal ridge (45, 55) and forming, with respect to the horizontal, a first angle $a$ greater than or equal to 0° and at least one second flat face (43, 53) connected to the first (42, 52) via a second horizontal ridge (46, 56) having a radius of curvature less than an estimated value of the natural radius of curvature of the sheet (10), the second face (43, 53) forming with respect to the horizontal a second angle $b$ greater than the first and having a third horizontal ridge (47, 57) at its lower part, the ridges and the faces having a geometry chosen such that the sheet (10) resting on the second and third ridges (46, 47, 56, 57) is constrained to space itself from the first and second faces (42, 43, 52, 53) and to rise above the level of the central part (31, 41, 51) before coming into contact with this.

2. Plotter according to Claim 1, characterised in that the radius of curvature of the second ridge (46, 56) is less than 40 mm.

3. Plotter according to Claim 2, characterised in that the radius of curvature of the second ridge (46, 56) is as small as possible and less than 5 mm.

4. Plotter according to Claim 1, 2 or 3, characterised in that the vertical distance $h$ between the level of the central part (31, 41, 51) and the second ridge (46, 56) is less than 6 mm.

5. Plotter according to Claim 4, characterised in that the horizontal distance between the writing path and the second ridge (46, 56) is greater than 40 mm.

6. Plotter according to one of Claims 1 to 5, characterised in that the second angle $(b)$ is comprised between 50° and 65° and the distance between the second and third ridges (46, 56, 47, 57) is greater than 25 mm.

7. Plotter according to one of Claims 1 to 6, characterised in that each of the front and rear parts of the plate comprises a third flat face (44, 54) connected to the second face via the third horizontal ridge (47, 57) and forming with respect to the horizontal a third angle $(c)$ greater than the second angle $(b)$ and less than 90°, the third face (44, 54) having a geometry chosen such that the sheet rests on the lower edge of the third face and on the second and third ridges (46, 56, 47, 57) while spacing itself from the second and third faces.

8. Plotter according to Claim 7, characterised in that the shape formed by the lower edge of the third face and by the second and third ridges (46, 56, 47, 57) is inscribed in a circle of radius greater than 40 mm.

9. Plotter according to Claim 7, characterised in that the first angle $(a)$ is substantially equal to 1.4°, the second angle $(b)$ is substantially equal to 55° and the third angle $(c)$ is substantially equal to 81°.

10. Plotter according to any one of Claims 1 to 9, in which the first entrainment means comprise a rotating drum (11) with a horizontal axis perpendicular to the first direction (X) and the upper generatrix of which lies substantially flush with the level of the central part (31, 41, 51) of the plate (30) across an opening (32) formed in this and means (12) to apply the sheet against the rotating drum, characterised in that the support surface of the plate (30) is symmetrical with respect to the vertical plane passing through the axis of the drum (11).

11. Plotter according to any one of Claims 1 to 10, characterised in that the application of the sheet (10) against the plate (30) in the central part (31, 41, 51) of this is effected by aspiration across openings (32, 37, 38) formed in the plate (30).

12. Plotter according to any one of Claims 1 to 11, characterised in that the support surface of the plate (30) is provided with an electrically conducting covering.

13. Plotter according to any one of Claims 1 to 11, characterised in that the support surface of the plate (30) is provided with an anti-static covering.

Fig.1

EP 0 320 328 B1

Fig.2

Fig.3

Fig.4

EP 0 320 328 B1

# Fig.5